# EUROPEAN PATENT APPLICATION

(11) **EP 2 911 287 A1**
(43) Date of publication of application: **26.08.2015**
(21) Application number: 14156426.0
(22) Date of filing: 24.02.2014
(51) Int. Cl.: H02M 5/458, H02M 7/23, H02M 1/42, H02M 1/12

(54) **Apparatus and method for reducing harmonics**

(71) Applicant: Danfoss Power Electronics A/S, 6300 Gråsten (DK)
(72) Inventor: Zare, Firuz, 6320 Egernsund (DK)
(74) Representative: Knoblauch, Andreas

(57) **Abstract**

The present invention provides systems and methods for reducing harmonics, for example when using an AC to AC converter to drive a load such as a motor drive. In a first embodiment, a plurality of AC/DC converter stages are connected in parallel between an AC supply and a DC link, each of said AC/DC stages including a rectifier, with the rectifiers of the load driving circuits being configured such that the rectification of the AC supply by the load driving circuits is staggered. Blocking diodes are used to prevent current circulation from one rectifier to another.

## Description

### FIELD OF THE INVENTION

The present invention relates to the reduction of harmonics in power supply systems that are caused, for example, when driving non-linear loads.

### BACKGROUND OF THE INVENTION

An ideal AC power source is sinusoidal in nature. Non-linear loads (such as rectifiers and motor drives) introduce different frequencies into a power supply. These different frequencies are called harmonics.

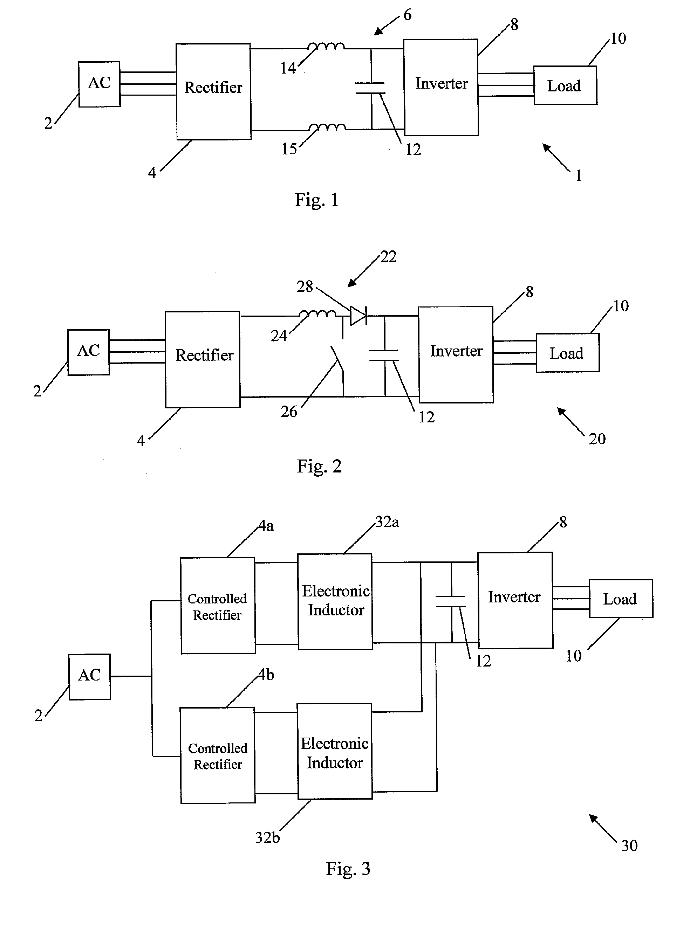

Figure 1 shows a system, indicated generally by the reference numeral 1, in which a load (such as a motor) is driven under the control of an inverter. The system 1 comprises a 3-phase AC power source 2, a 3-phase rectifier 4, a DC link section 6, an inverter 8 and a load 10. The DC link section 6 includes a DC link capacitor 12. A first inductor 14 is connected between a first output of the rectifier 4 and a first terminal of the DC link capacitor 12. A second inductor 15 is connected between a second output of the rectifier 4 and a second terminal of the DC link capacitor 12. The inductors 14, 15 (which are provided on the DC side of the rectifier 4) are sometimes referred to as DC chokes.

As is well known in the art, the AC supply voltage provided by the AC power source 2 is converted into a DC voltage that appears across the DC link capacitor 12. The inverter 8 converts the DC signal at the DC link capacitor into a controllable AC signal for driving the load 10 (that AC signal typically being controllable in amplitude, phase and frequency). Thus, the system 1 provides a controllable AC-AC converter for driving the load 10.

The rectifier 4 and the inverter 8 have non-linear characteristics. Accordingly, the system 1 can cause significant harmonic currents to be introduced into the AC supply 2. The inductors 14 and 15 are provided to reduce frequency components (i.e. harmonics) from being returned to the AC supply 2.

The use of inductors to reduce harmonics is well established. However, inductors can be large and expensive, particularly when seeking to filter relatively low frequency harmonic currents. Further, inductors can saturate at higher current levels. There remains a need for a system in which harmonic currents can be reduced in other ways.

The present invention seeks to address the problems outlined above. The principles of the present invention are applicable to motor drive applications (such as the applications described below). However, the principles of the invention can be applied to other many other applications, including, but not limited to, induction heating and arc furnace systems.

### SUMMARY OF THE INVENTION

The present invention provides a load driving circuit comprising: a AC/DC converter, a DC link stage and an inverter, wherein the AC/DC converter comprises a plurality of AC/DC converter stages connected in parallel between an AC supply and the DC link stage, and the inverter has an input coupled to the DC link stage and an output for driving a load, wherein each of the AC/DC converter stages comprises: a rectifier having an input coupled to the AC supply, wherein the rectifiers are arranged such that the rectification of at least some of the parallel connected AC/DC converter stages is staggered; and a diode configured to prevent current drawn by the rectifier of the AC/DC converter stage from returning to the AC supply via the rectifier of another AC/DC converter stage. The staggering of the rectification of the parallel connected AC/DC converter stages is provided in order to reduce harmonics in the AC supply. The provision of a diode is intended to prevent the circulation of currents between the parallel connected AC/DC converter stages, thereby improving the control of the load driving circuit.

A first control module may be coupled to at least some of said rectifiers for controlling the timing of the rectification of at least some of the parallel connected AC/DC converters.

Alternatively, or in addition, the timing of the rectification of at least some of the rectifiers of the parallel connected AC/DC converters may be adjustable (e.g. under the control of a control module).

In many forms of the invention, at least some of said rectifiers are thyristor-based rectifiers. Thus, the thyristors can be controlled in order to provide said staggered rectification. In some forms of the invention, one of the parallel connected AC/DC converter stages includes a diode rectifier and the other parallel connected AC/DC converter stages include thyristor based rectifiers.

At least some (typically all) of the AC/DC converter stages may further comprise an electronic inductor having an input coupled to the rectifier and being configured to control the voltage and/or current drawn from the AC supply by the respective rectifier. By way of example, each electronic inductor may be controlled such that substantially square wave current pulses are drawn from the AC supply by the respective rectifier. In alternative forms of the invention, one or more of the electronic inductors may be controlled in order that different shaped current pulses are drawn from the AC supply by the respective rectifier.

Each electronic inductor may have a first terminal connected to a first terminal of the DC link stage and to a first input of the inverter and each diode may have a cathode connected to a second terminal of the respective electronic inductor and an anode connected to a second terminal of the DC link stage and to a second input of the inverter.

A second control module may be provided for controlling at least some of the electronic inductors. In some forms of the invention, the functionality of the first control module (for controlling timing of the rectification of at least some of the parallel connected AC/DC converters) and the second control module (for controlling the electronic inductor) are provided by a single control module.

In some forms of the invention, at least some of the plurality of AC/DC converter stages can be disabled. For example, the number of AC/DC converter stages that are enabled may be dependent on the power output required from the load driving circuit.

The present invention also provides a method comprising controlling a plurality of AC/DC converter stages connected in parallel between an AC supply and the DC link stage of a load driving circuit, the method comprising: controlling rectification of the AC supply by the parallel connected AC/DC converter stages, including controlling rectification timing such that the rectification of at least some of the parallel connected AC/DC converter stages are staggered; and preventing current drawn during rectification by any AC/DC converter stage from returning to the AC supply via the another AC/DC converter stage. The rectification may include the use of at least some thyristor-based rectifiers in order to provide the staggered rectification. The rectification timing of at least some of the rectifiers of the parallel-connected AC/DC converter stages may be adjustable.

Controlling rectification may include controlling the voltage and/or current drawn from the AC supply during rectification. This may be achieved, for example, using electronic inductors.

The method may further comprise enabling or disabling at least some of the plurality of AC/DC converter stages.

### BRIEF DESCRIPTION OF THE DRAWINGS

The invention will now be described in further detail with reference to the following schematic drawings, in which:
Figure 1 shows a prior art system in which a load is driven by a under the control of an inverter;
Figure 2 shows a circuit in accordance with an aspect of the present invention in which a load is driven under the control of an inverter;
Figure 3 is a highly schematic block diagram of a system in accordance with an aspect of the invention;
Figure 4 shows a simulation of an exemplary use of the system of Fig. 3;
Figure 5 is a more detailed schematic block diagram of the system of Fig. 3;
Figure 6 shows results of a simulation of the system of Fig. 5;
Figure 7 is a block diagram of a system in accordance with an aspect of the present invention; and
Figure 8 shows results of a simulation of the system of Fig. 7.

### DETAILED DESCRIPTION OF THE INVENTION

Figure 2 shows a circuit, indicated generally by the reference numeral 20, incorporating some of the principles of the present invention.

The circuit 20 includes the AC supply 2, the rectifier 4, the DC link capacitor 12, the inverter 8 and the load 10 described above with reference to the system 1. However, the DC inductors 14 and 15 are omitted and an electronic inductor, indicated generally by the reference numeral 22 is provided between the rectifier 4 and the DC link capacitor 12.

The electronic inductor 22 (which is known per se) comprises an inductor 24, a switch 26 and a diode 28. The switch 26 is typically implemented using a transistor (such as an IGBT). The electronic inductor can be used to precisely control the DC link current and voltage as desired in a way that is not possible using a pair of DC inductors. In addition, the electronic inductor can be made smaller and (in some applications) more cheaply than such DC inductors.

Figure 3 is a system, indicated generally by the reference numeral 30, for driving the load 10 in accordance with an aspect of the present invention. The system 30 includes the AC supply 2, inverter 8, load 10 and DC link capacitor 12 of the system 20 described above.

In the system 30, a first rectifier 4a (which is a controlled rectifier) and a first electronic inductor 32a (similar to the electronic inductor 22 of the system 20) are used to provide a DC signal to the DC link capacitor 12. A second rectifier 4b (which is a controlled rectifier) and a second electronic inductor 32b (also similar to the electronic inductor 22 of the system 20) are also used to provide a DC signal to the DC link capacitor 12.

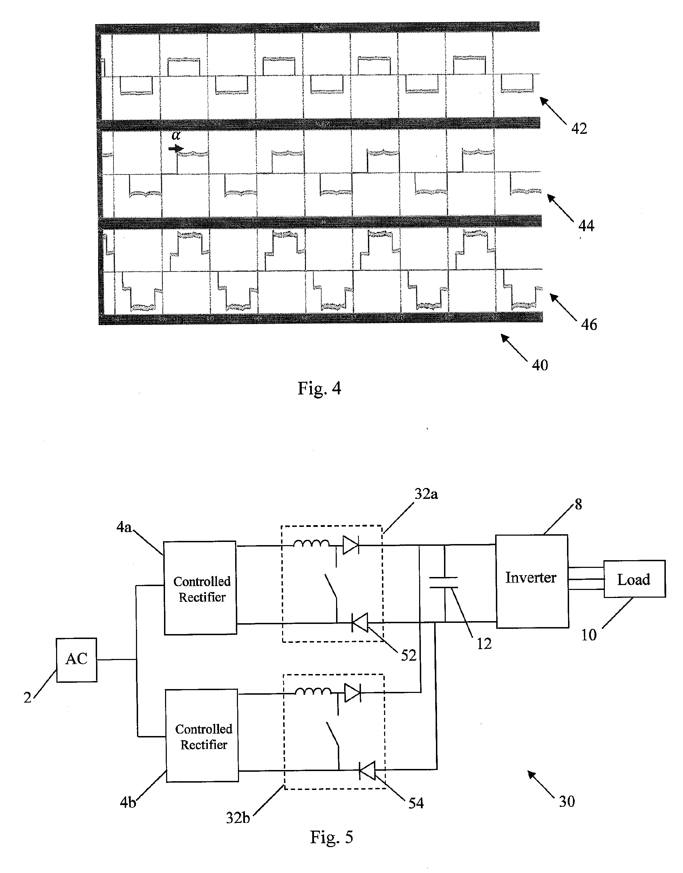

Figure 4 shows results, indicated generally by the reference numeral 40, of a simulation of an exemplary use of the circuit of Figure 3.

The first line of the simulation 40 shows the current drawn (indicated by the reference numeral 42) from the AC supply 2 by the controlled rectifier 4a. As is well known in the art, when a 3-phase rectifier is used in conjunction with an AC power supply, the rectifier draws a positive pulse for 120 degrees of the 360 degree cycle and a negative pulse for 120 degrees of the 360 degree cycle. In between each positive and negative pulse is a 60 degree period when no current is drawn by the square wave current pulse from the AC supply.

The shape of the pulses in the current 42 is determined by the electronic inductor 32a. By controlling the switching of the electronic inductor 32a such that a constant current is drawn from the controlled rectifier 4a, the square wave pulse 42 shown in Figure 4 is drawn.

The second line of the simulation 40 shows the current drawn (indicated by the reference numeral 44) from the AC supply by the controlled rectifier 4b. As with the current pulse 42, the controlled rectifier 4b draws a positive pulse for 120 degrees of the 360 degree cycle and a negative pulse for 120 degrees of the 360 degree cycle. The controlled rectifier 4b is controlled such that the pulse 44 is shifted relative to the pulse 42. In one embodiment of the invention, the pulse 44 is shifted by 30 degrees relative to the pulse 42 (but other phase shifts may be used in alternative embodiments of the invention to cancel or reduce selected harmonics).

The current pulses 42 and 44 are both drawn from the AC supply 2. The third line of the simulation 40 (indicated by the reference numeral 46) shows the sum of the currents 42 and 44 that are drawn from the supply 2. It is clear that the current 46 is more sinusoidal than the currents 42 and 44. Accordingly, the current 46 includes less harmonic distortion than the current 42 and 44 drawn by the rectifiers 4a and 4b respectively. Mathematical modelling of the circuit 30 has shown that when the rectifiers 4a and 4b are controlled to have identical current waveforms with the exception of a phase shift (e.g. a 30 degree phase shift), the total harmonic distortion (THD) for the system 30 (which does not include an AC choke at the input side of the rectifiers) is about 17% for a broad range of load variations. Including a 1mH AC choke at the input side of each rectifier reduces the THD to about 6%. Although it is difficult to generalise, the prior art circuit 1 described above might have a THDi of 45% or even higher (although this value is highly dependent on variables such as inductors sizes and load powers). Thus, the system 30 can be used to significantly reduce harmonic distortion.

The rectifier circuit 4 described above with reference to Figures 1 and 2 would typically be implemented using a diode bridge circuit. By replacing the diodes in the diode bridge circuit with silicon controlled rectifiers (SCRs) or thyristors, a rectifier circuit can be generated in which the phase can be controlled. Accordingly, a thyristor-based rectifier can be used to provide the phase shifting functionality of the rectifiers 4a and 4b described above.

Figure 5 is a more detailed schematic block diagram of the system 30. As discussed above, the first electronic inductor 32a and the second electronic inductor 32b are similar to the electronic inductor 22 described above with reference to Figure 2. However, the first and second electronic inductors 32a and 32b are not identical to the electronic inductor 22 since, as shown in Figure 5, the first electronic inductor includes a first diode 52 and the second electronic inductor includes a second diode 54.

A first output of the first electronic inductor 32a is connected to a first input of the inverter (and hence to the first terminal of the capacitor 12). Similarly, a first output of the second electronic inductor 32b is connected to the first input of the inverter 8 such that the first outputs of the first and second electronic inductors are connected together.

The switch of the first electronic inductor 32a is connected to the cathode of the first diode 52. The anode of the first diode 52 is connected to a second input of the inverter 8 (and hence to the second terminal of the capacitor 12). Similarly, the switch of the second electronic inductor 32b is connected to the cathode of the second diode 54. The anode of the second diode 54 is connected to the second input of the inverter such that the anodes of the first and second electronic inductors are connected together.

The diodes 52 and 54 prevent the circulation of currents from one rectifier/electronic inductor pair to another. Consider, for example, a current drawn by one phase of the rectifier 4a from a 3-phase AC supply 2. Assume that the switch of the electronic inductor 32a is closed so that the current can flow through that switch. The diode 52 prevents that current from flowing from the electronic inductor 32a towards the DC link capacitor, so that current must flow back through the rectifier 4a to return to the AC supply 2. Thus, all current drawn from the AC supply 2 by the rectifier 4a returns to the AC supply via the same rectifier.

Consider now what would happen if the diode 52 was replaced with a short-circuit. Consider, again, a current drawn by one phase of the rectifier 4a from the AC supply 2. Assume, again, that the switch of the electronic inductor 32a is closed so that the current can flow through that switch. Since the diode 52 is not present, the current that flows through the switch can either flow back to the AC supply 2 via the rectifier 4a or via the rectifier 4b. Thus, current circulation occurs between the parallel rectifier/electronic inductor stages.

Current circulation between parallel rectifier/electronic inductor stages results in a loss of control over the system. The harmonic reduction advantages of the present invention are difficult to provide if current circulation occurs.

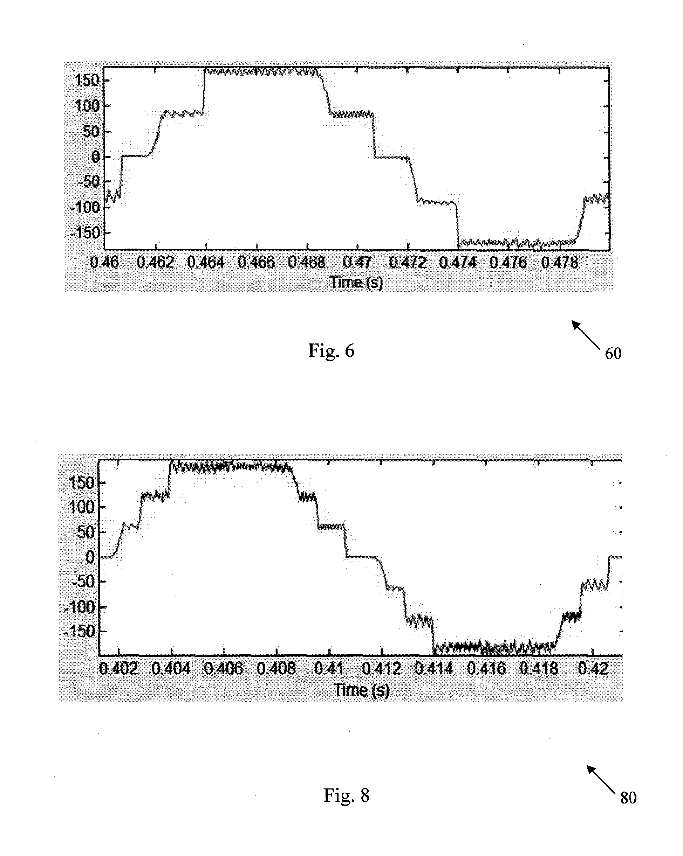

Figure 6 shows the current drawn from the AC supply 2 in an exemplary simulation of the circuit 30. The pulse, indicated generally by the reference numeral 60, is similar to that shown in Figure 4. The pulse is, in effect, the sum of two staggered square wave pulses, with the timing of the steps in the pulse depending on the phase shift between the rectifiers 4a and 4b and the precise shape of the curves depending on the parameters of the electronic inductors 32a and 32b.

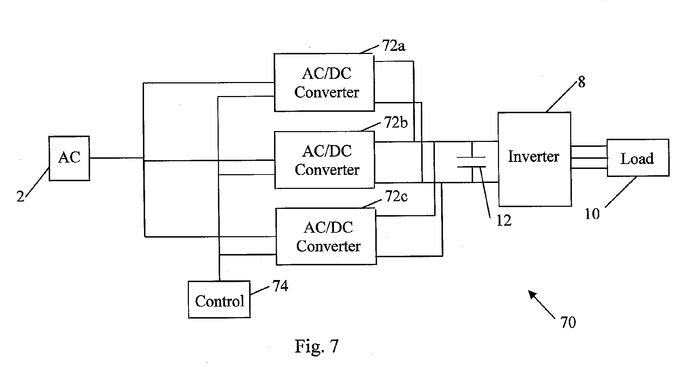

The system 30 described above includes a two rectifier/electronic inductor circuits operating in parallel that are driving a single load. Clearly, the principles of the invention can be applied to the parallel connection of any number of rectifier/electronic inductor circuits. By way of example, Figure 7 is a block diagram of a system, indicated generally by the reference numeral 70, including three rectifier/electronic inductor circuits connected in parallel.

As shown in Figure 7, the system 70 includes the AC supply 2, inverter 8, load 10 and DC link capacitor 12 of the systems 20 and 30 described above. In addition, a first AC-DC converter 72a (incorporating the controlled rectifier 4a and electronic inductor 32a), a second AC-DC converter 72b (incorporating the controlled rectifier 4b and electronic inductor 32b) and a third AC-DC converter 72c (incorporating a similar controlled rectifier and electronic inductor pair) are provided in parallel between the AC supply 2 and the DC link capacitor 12.

The system 70 additionally comprises a control module 74 that is used to control the relative phases of the rectifiers of the AC-DC converters 72a, 72b and 72c.

The system 70 may be configured to provide a fixed phase shift between the AC-DC converters (for example the second AC-DC converter 72b may have a phase shift of 15 degrees with respect to the first AC-DC converter 72a and the third AC-DC converter 72c may have a phase shift of 30 degrees with respect to the first AC-DC converter). However, by providing a control module 74, it is possible to define different phase shifts or even to enable the phase shifts to be variable, depending on the operating conditions of the system 70.

The control module 74 may additionally control the pulse shaping of any electronic inductors provided by the AC/DC converters 72a, 72b and 72c.

Figure 8 shows the current drawn from the AC supply 2 in an exemplary simulation of the circuit 70. The pulse, indicated generally by the reference numeral 80, is similar to that shown in Figure 6. The pulse is, in effect, the sum of three staggered square wave pulses, with the timing of the steps in the pulse depending on the phase shift between the rectifiers of the AC/DC converters 72a, 72b and 72c and the precise shape of the curves depending on the parameters of the electronic inductors of the AC/DC converters 72a, 72b and 72c.

As the phase shift of the currents should be relative to each other, one of the rectifiers can be a diode-rectifier, with the others being controlled rectifiers. This configuration may reduce the total cost of the system. The system 70 includes the provision of a central control module 74. This is not essential to all forms of the invention. In the event that dynamic adjustment of the phase shift is not required, then the phase shift may be pre-set, such that a control module may not be needed. Further, an alternative form of control includes the AC-DC converter modules communicating with one another, rather than via the central control module 74. The skilled person will be aware of many control arrangements that could be provided. For example, using random phase shift values for multi-independent drive systems or using phase shift values that are determined based on load conditions and/or power levels using a look-up table.

Clearly, although not shown in Figures 3 and 5, the system 30 could be provided with a similar control module for controlling the relative phases of the rectifiers 4a and 4b and/or for controlling switching of the electronic inductors 32 and 32b.

Systems have been described having two and three parallel connections of rectifiers and electronic inductors. The principles of the present invention are applicable to any number of such parallel connections. In principle, as the number of parallel connections increases, the harmonic distortion is reduced. However, increasing the number of parallel electronic inductors may increases switching losses in some implementations of the invention.

The system 70 can be used to provide a modular system in which the number of parallel AC/DC converters used in any particular application can be varied as required. For example, two or more parallel AC/DC converters may be used for driving high power loads, whereas a single AC/DC converter might be used at lower powers.

The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the spirit and scope of the invention.

## Claims

1. A load driving circuit comprising: a AC/DC converter, a DC link stage and an inverter, wherein the AC/DC converter comprises a plurality of AC/DC converter stages connected in parallel between an AC supply and the DC link stage, and the inverter has an input coupled to the DC link stage and an output for driving a load, wherein each of the AC/DC converter stages comprises:
a rectifier having an input coupled to the AC supply, wherein the rectifiers are arranged such that the rectification of at least some of the parallel connected AC/DC converter stages is staggered; and
a diode configured to prevent current drawn by the rectifier of the AC/DC converter stage from returning to the AC supply via the rectifier of another AC/DC converter stage.

2. A circuit as claimed in claim 1, further comprising a first control module coupled to at least some of said rectifiers for controlling the timing of the rectification of at least some of the parallel connected AC/DC converters.

3. A circuit as claimed in claim 1 or claim 2, wherein the timing of the rectification of at least some of the rectifiers of the parallel connected AC/DC converters is adjustable.

4. A circuit as claimed in any one or claims 1 to 3, wherein at least some of said rectifiers are thyristor-based rectifiers.

5. A circuit as claimed in any preceding claim, wherein at least some of the AC/DC converter stages further comprises an electronic inductor having an input coupled to the rectifier and being configured to control the voltage and/or current drawn from the AC supply by the respective rectifier.

6. A circuit as claimed in claim 5, wherein each electronic inductor has a first terminal connected to a first terminal of the DC link stage and to a first input of the inverter and each diode has a cathode connected to a second terminal of the respective electronic inductor and an anode connected to a second terminal of the DC link stage and to a second input of the inverter.

7. A circuit as claimed in claim 5 or claim 6, wherein each electronic inductor is controlled such that substantially square wave current pulses are drawn from the AC supply by the respective rectifier.

8. A circuit as claimed in any one of claims 5 to 7, further comprising a second control module for controlling the electronic inductors.

9. A circuit as claimed in any preceding claim, wherein at least some of the plurality of AC/DC converter stages can be disabled.

10. A method comprising controlling a plurality of AC/DC converter stages connected in parallel between an AC supply and the DC link stage of a load driving circuit, the method comprising:
controlling rectification of the AC supply by the parallel connected AC/DC converter stages, including controlling rectification timing such that the rectification of at least some of the parallel connected AC/DC converter stages are staggered; and
preventing current drawn during rectification by any AC/DC converter stage from returning to the AC supply via the another AC/DC converter stage.

11. A method as claimed in claim 10, wherein controlling rectification includes controlling the voltage and/or current drawn from the AC supply during rectification.

12. A method as claimed in claim 10 or claim 11, wherein the rectification timing of at least some of the rectifiers of the parallel connected AC/DC converter stages is adjustable.

13. A method as claimed in any one of claims 10 to 12, further comprising enabling or disabling at least some of the plurality of AC/DC converter stages.
